# EUROPÄISCHE PATENTSCHRIFT

(11) **EP 0 685 502 B1**
(45) Veröffentlichungstag und Bekanntmachung des Hinweises auf die Patenterteilung: **14.04.1999**
(21) Anmeldenummer: 95107104.2
(22) Anmeldetag: 11.05.1995
(51) Int. Cl.: C08G 63/78, C08G 63/88

(54) **Verfahren zur mehrstufigen Vakuumerzeugung bei der Polyester-Herstellung**
Process for the multistage generation of vacuum for polyester production
Procédé pour la génération de vacuum en multiples étapes pour la production de polyester

(30) Priorität: 03.06.1994 DE 4419397
(43) Veröffentlichungstag der Anmeldung: 06.12.1995
(73) Patentinhaber: Lurgi Zimmer Aktiengesellschaft, 60388 Frankfurt (DE)
(72) Erfinder: Krautstrunk, Jürgen, D-60388 Frankfurt / Main (DE); Mackensen, Klaus, D-60433 Frankfurt / Main (DE)

(56) Entgegenhaltungen:
- EP-A- 0 244 546
- DE-A- 2 315 492
- DE-A- 2 409 343
- DE-A- 2 809 113
- GB-A- 1 382 095

## Beschreibung

Die vorliegende Erfindung betrifft ein Verfahren zur mehrstufigen Vakuumerzeugung sowie Kondensation und Rückführung der abzusaugenden, mindestens ein C_{2 bis 4}-Alkylenglykol und Reaktionsnebenprodukte enthaltenden Brüden der Polykondensation von Vorkondensat bei der Polyester-Herstellung, wobei die letzte, gegen Atmosphärendruck verdichtende Stufe eine Flüssigkeitsringpumpe, einen Kühler sowie einen Entgasungsbehälter und jede der mindestens zwei vorangehenden Stufen je eine Glykoldampfstrahlpumpe sowie einen nachgeschalteten Glykolmischkondensator umfaßt.

Polyester werden hergestellt, indem mindestens eine Dicarbonsäure, z. B. Terephthalsäure oder Naphthalindicarbonsäure, oder deren Methylester mit mindestens einem Alkylenglykol, z. B. Ethylenglykol oder 1,4-Butandiol, dem gegebenenfalls kleinere Mengen eines cyclischen oder aromatischen Diols wie 1,4-Cyclohexandimethanol zugesetzt sein können, zunächst verestert bzw. umgeestert wird, danach unter Abspaltung von Wasser und wenig Glykol bei mäßigem Vakuum vorkondensiert und schließlich unter Abspaltung von Glykol und wenig Wasser bei hohem Vakuum polykondensiert wird.

Es ist bekannt, zur Erzeugung des Vakuums und zum Absaugen der Polykondensationsbrüden eine Wasserstrahlpumpe, der eine oder zwei Glykoldampfstrahlpumpen jeweils mit nachgeschaltetem Mischkondensator vorangestellt sind, einzusetzen (US-Patent 3 468 849 und DE-Offenlegungsschrift 22 27 261). Als Betriebsmittel für die Glykoldampfstrahlpumpen wird Ethylenglykol-Dampf mit einem Druck von etwa 2 bar absolut verwendet, ausgehend entweder von Frisch-Glykol oder von zuvor gereinigtem Glykol. Nachteilig hierbei ist, daß ein über längere Zeit störungsfreier Betrieb nur mit reinem Glykol möglich ist. Bei Rezirkulierung des Glykols ohne Reinigung würden sich die von den Brüden mitgeführten Reaktionsnebenprodukte anreichern. Verstopfungen der Strahldüsen durch Oligomere und Zusammenbrechen der Saugleistung bedingt durch Nebenprodukte mit hohem Dampfdruck, wie Wasser und Acetaldehyd bzw. Tetrahydrofuran, wären die Folge. Auch steht der Glykoldampf unter Überdruck, was bei der geringsten Undichtigkeit zu Leckagen und wegen der hohen Entzündlichkeit des Glykols zu Bränden führt.

Ein neuerer Vorschlag (US-Patent 4 011 202) sieht für die gleiche Aufgabe zwei Glykoldampfstrahlpumpen, jeweils mit nachgeschaltetem Flächenkühler und Zyklon, sowie eine Rotationspumpe mit geschlossenem Glykolkreislauf mit Kühler und Entgasungsbehälter vor. Ethylenglykol und sämtliche Reaktionsnebenprodukte werden soweit wie möglich an den Flächenkühlern kondensiert. Zur Vermeidung einer Anreicherung von Nebenprodukten wird ein Teil des Kondensates aus dem Prozeß ausgeschleust und der Rest nach Abfiltration von Oligomeren zur Treibdampferzeugung verwendet. Die angegebenen Druckstufen lassen darauf schließen, daß auch hierbei mit unter Überdruck stehendem Glykoldampf, mit der Folge erhöhter Brandgefahr, gearbeitet wird. Auch erfordert das Abfiltrieren von Oligomeren einen sehr häufigen Filterwechsel, da die Oligomere die Filter innerhalb kürzester Zeit zusetzen. Die notwendige Ausschleusung eines Teils des Kondensates erhöht die Verfahrenskosten.

Das Verfahren des DD-Patentes 131 753 vermeidet die problematische Oligomeren-Filtration durch Teilkondensation der vereinigten Brüden aus Vorkondensation und Polykondensation vor der nicht näher definierten Vakuumvorrichtung in einem Sprühkondensator bei 100 bis 140 °C. Das oligomerenreiche Teilkondensat wird in die Polyester-Synthese rückgeführt. Die restlichen Brüden, die mehr als 90 % der Gesamt-Brüden ausmachen, müssen nach erfolgter Totalkondensation in einem Sprühkondensator vor jeglicher Weiterverwendung zusammen mit dem zur Totalkondensation benötigten Sprühglykol insgesamt destillativ gereinigt werden.

Aufgabe der vorliegenden Erfindung ist daher, das eingangs definierte Verfahren zur Vakuumerzeugung sowie Kondensation und Rückführung der abgesaugten Brüden der Polyester-Polykondensation so zu modifizieren, daß das zum Betrieb der Glykoldampfstrahlpumpen und der Mischkondensatoren benötigte Glykol ohne Filtration und/oder destillative Reinigung auch über einen längeren Betriebszeitraum rezirkuliert werden kann und das überschüssige Glykol einschließlich der kondensierten Reaktionsnebenprodukte möglichst ohne Ausschleusung und ohne zusätzliche Reinigung in den Polyester-Herstellungsprozeß rückgeführt werden kann. Auch sollte die Brandgefahr möglichst gering gehalten werden.

Die Lösung dieser Aufgabe erfolgt erfindungsgemäß durch ein Verfahren gemäß den Angaben der Patentansprüche. Kennzeichnend für das Verfahren der Erfindung sind
- die Verwendung von überhitztem Glykoldampf mit einem Druck im Bereich von 0,8 bis 1,0 bar absolut als Treibdampf für die Glykoldampfstrahlpumpen und
- die Einstellung der Betriebsbedingungen der Mischkondensatoren derart, daß das Glykol möglichst vollständig kondensiert, während die leichtsiedenden Reaktionsnebenprodukte einschließlich Wasser soweit wie möglich in der Gasphase verbleiben und erst danach, in der letzten Verfahrensstufe kondensiert werden.

Das vorliegende Verfahren ist geeignet zur Vakuumerzeugung für die Polykondensation von Homo- oder Co-Polyester-Vorkondensaten unter der Voraussetzung, daß die den Polyester bildende Diol-Komponente überwiegend aus Ethylenglykol, 1,3-Propandiol und/oder 1,4-Butandiol besteht. Bevorzugtes Anwendungsgebiet ist die Herstellung von Polyethylenterephthalaten und deren niedrig modifizierten (bis etwa 20 Mol-%) Copolymeren. Wahlweise kann zusätzlich, gleichzeitig das Vakuum für die der Polykondensation vorangehende ein- oder mehrstufige Vorkondensation erzeugt werden, wobei die Saugleitungen hierfür von intermediären, dem gewünschten Vakuum entsprechenden Stufen ausgehen.

Die Vakuumerzeugung erfolgt mehrstufig, wobei die letzte, gegen Atmosphärendruck verdichtende Stufe eine Flüssigkeitsringpumpe in einem geschlossenen Glykolkreislauf mit Kühler und Entgasungsbehälter umfaßt. Jede der in Abhängigkeit des zu erzeugenden Vakuums mindestens zwei, vorzugsweise drei vorangehenden Stufen besteht aus einer Glykoldampfstrahlpumpe mit nachgeschaltetem Glykolmischkondensator (auch als Einspritzkondensator bekannt).

Jede dieser Glykoldampfstrahlpumpen weist ein Verdichtungsverhältnis im Bereich von 7 bis 10 auf und wird erfindungsgemäß mit Glykoldampf mit einem Druck im Bereich von 0,8 bis 1,0 bar absolut, vorzugsweise 0,90 bis 0,98 bar betrieben. Dadurch, daß der Glykoldampf höchstens Atmosphärendruck, vorzugsweise leichten Unterdruck aufweist, wird vermieden, daß bei Undichtigkeiten des Dampfsystems leicht entzündliches Glykol austritt. Die Brandgefahr ist somit deutlich herabgesetzt. Um zu verhindern, daß Treibdampf innerhalb der Strahldüsen kondensiert, wird der Glykoldampf überhitzt, vorzugsweise um 5 bis 25 °C.

Sämtliche Mischkondensatoren werden erfindungsgemäß so betrieben, daß die Glykolphase einschließlich der höhersiedenden Bestandteile, insbesondere der Oligomeren, möglichst vollständig kondensiert, während die leichtersiedenden Reaktionsprodukte - überwiegend Wasser neben Glykolspaltprodukten, wie Acetaldehyd bei Ethylenglykol oder Tetrahydrofuran bei 1,4-Butandiol - soweit wie möglich, zusammen mit den nicht kondensierbaren Bestandteilen, insbesondere Leckage-Luft, in der Gasphase verbleiben. Die hierfür erforderlichen Betriebsbedingungen werden bekannterweise von den einzelnen Partialdampfdrücken bestimmt, die ihrerseits von der chemischen Natur der Komponenten, den jeweiligen Mengenanteilen, der Temperatur und dem Gesamtdruck abhängen, und müssen für jeden Anwendungsfall individuell in für den Fachmann geläufiger Weise ermittelt werden. Diese Betriebsweise bewirkt eine Reinigung des Glykols von den leichtersiedenden Verunreinigungen, so daß eine Kreislaufführung des Glykolkondensates als Sprühglykol für die Mischkondensatoren ohne weitere Maßnahmen möglich ist.

Ein Teil des Glykolkondensates wird als Treibdampf der Glykoldampfstrahlpumpen rezirkuliert, wobei dieser Teil gleichzeitig zur Dampferzeugung von den höhersiedenden Verunreinigungen befreit wird, die als Sumpfphase aus dem Verdampfer ausgetragen werden. Entsprechend dem erfindungsgemäß niedrigen Druck des Treibdampfes von 0,8 bis 1,0 bar absolut kann der Dampferzeuger bei ebenfalls relativ niedrigem Druck im Bereich von 0,9 bis 1,2 bar absolut betrieben werden. Eine Verdampfung bei verhältnismäßig niedriger Temperatur ist daher möglich, mit der Folge, daß die Verdampfer-Sumpfphase nur einer geringen thermischen Belastung ausgesetzt ist. Die Sumpfphase kann daher in der Mehrzahl der Anwendungsfälle ohne weitere Reinigung in den Polyester-Herstellungsprozeß rückgeführt werden. Lediglich in Sonderfällen, wie Polyester für hochtransparente Flaschen, kann vor der Rückführung eine zusätzliche destillative Aufarbeitung zweckmäßig sein.

Die kondensierbaren Bestandteile der Gasphase aus den Mischkondensatoren werden in der letzten Stufe kondensiert und, zusammen mit in den geschlossenen Glykolkreislauf dieser Stufe eingespeistem, überschüssigem Glykolkondensat aus den Mischkondensatoren, in den Polyester-Herstellungsprozeß rückgeführt. Normalerweise kann die Rückführung direkt, ohne weitere Maßnahmen erfolgen; nur in Einzelfällen, z. B. Butandiol mit höherem Tetrahydrofuran-Anteil, empfiehlt sich eine zusätzliche destillative Reinigung. Die nicht kondensierbaren Bestandteile werden aus dem Prozeß ausgeschleust und beispielsweise einer Abgasverbrennung zugeführt. Vorzugsweise wird für diese letzte Vakuumerzeuger-Stufe Kühlwasser einer üblichen Temperatur von etwa 25 bis 30 °C verwendet. Entsprechend sollte der Saugdruck der Flüssigkeitsringpumpe im Bereich von 80 bis 110 mbar absolut liegen. Bei hohem Anteil an zu kondensierenden leichtsiedenden Bestandteilen, wie Wasser, Acetaldehyd oder Tetrahydrofuran, kann der Dampfdruck des Betriebsmediums in der Ringpumpe, zusätzlich zur Einstellung der Temperatur, über die in den Kreislauf eingespeiste Menge an überschüssigem Glykolkondensat geregelt werden. Gegebenenfalls muß diese Menge durch Zusatz von Glykol ergänzt werden.

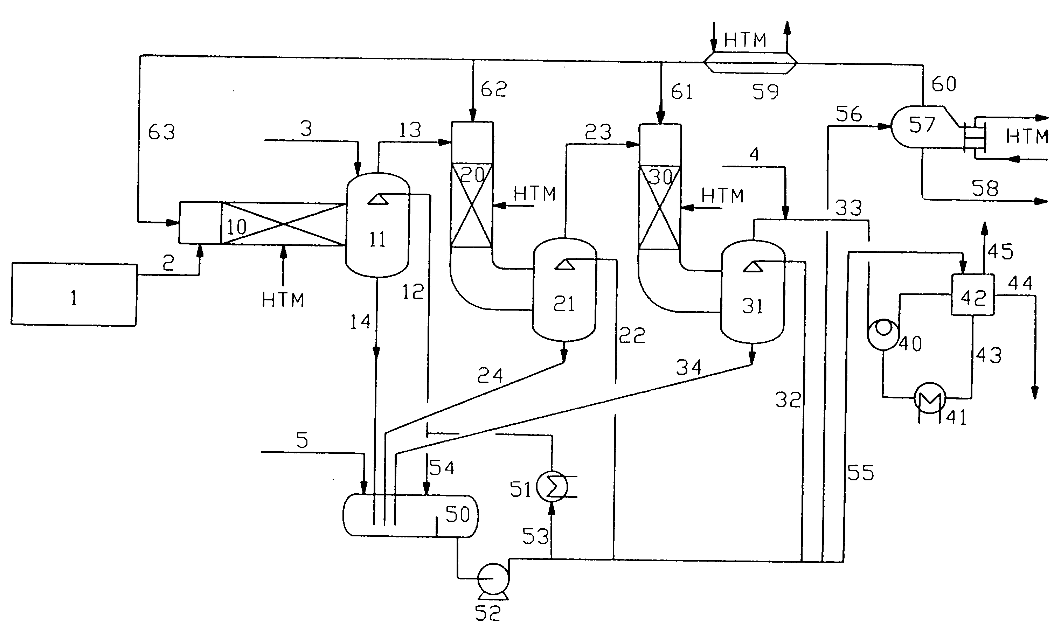

Eine bevorzugte Ausführungsform des erfindungsgemäßen Verfahrens wird nachfolgend anhand des in der Zeichnung dargestellten schematischen Fließbildes näher beschrieben.

Der Polykondensationsreaktor mit oder ohne nachgeschaltetem Prozeßkondensator-System (Rezipient (1)) wird mit Hilfe einer Kombination aus Glykoldampf-Strahlpumpen und Flüssigkeitsringpumpe evakuiert. Am Rezipienten (1) ist der Saugstutzen (2) der ersten Strahlstufe (10) angeschlossen. Das abzusaugende Gemisch aus dem Rezipienten (1) entspricht in der Zusammensetzung und der Menge den Reaktions- und Spaltprodukten, wie sie beim jeweiligen Polykondensationsprozeß für Homo-Polyester oder Co-Polyester anfallen. Beispielsweise sind dies bei Polyethylenterephthalat hauptsächlich Ethylenglykol neben Wasser, Acetaldehyd, Diethylenglykol, Triethylenglykol, Oligomeren und niedermolekularem Polyethylenterephthalat. Zusätzlich ist noch eine bestimmte Menge an Leckluft als Inertes in dem Saugstrom enthalten, die von der Dichtigkeit des Rezipienten (1) abhängig ist. Die Strahlpumpe (10) und deren Treibdampfdüse sind mit HTM (Heat Transfer Medium, synthetisches Wärmeträgeröl) beheizt. Der über Leitung (63) zugeführte Treibdampf der Strahlpumpe (10) wird dem weiter unten beschriebenen Glykol-Verdampfersystem (57, 59) entnommen.

Im ersten Mischkondensator (11) wird das aus der Strahlpumpe (10) austretende, dampfförmige Gemisch mittels temperiertem flüssigen Glykol (12) aus dem weiter unten beschriebenen ersten Einspritzteilkreislauf (50 - 53 und 12) partiell kondensiert. Zusätzlich zum Gemisch aus der ersten Glykoldampfstrahlstufe (10) werden die nicht kondensierten kondensierbaren Bestandteile und die Leckluft des Kondensationssystems des zweiten Vorkondensationsreaktors des Polyester-Herstellungsprozesses in diesen Mischkondensator (11) über Leitung (3) eingeleitet. Hierdurch wird gleichzeitig das für diese zweite Vorkondensation erforderliche Vakuum, unter Verzicht auf eine zusätzliche Vakuumpumpe, erzeugt. Die Zusammensetzung dieser Brüden (3) entspricht prinzipiell dem oben spezifizierten Gemisch (2), wobei jedoch der Anteil an Wasser erhöht ist. Die Führung dieser Kondensation (11) ist wesentlich für die Selbstreinigung des Systems an Leichtsiedern und Schwersiedern. Durch entsprechende Temperatureinstellung im ersten Einspritzteilkreislauf (50 - 53 und 12) mit Hilfe des Wärmetauschers (51) wird, zugehörig zum Vakuum im Mischkondensator (11), das durch das Verdichtungsverhältnis der Glykoldampfstrahlpumpe (10) gegeben ist, die partielle Brüdenkondensation so eingestellt, daß mit der Luft als Inertes die Leichtsieder (Wasser, Acetaldehyd oder Tetrahydrofuran usw.) soweit wie möglich in der Gasphase verbleiben, während das Glykol zusammen mit den Schwersiedern, vorwiegend Oligomere, möglichst kondensiert werden. Die kondensierten Anteile werden zusammen mit dem Einspritzglykol (12) über Leitung (14) und eine barometrische Abtauchung in einen Kreislaufsammelbehälter (50) geleitet.

Der Rezipient der zweiten Glykoldampf-Strahlstufe (20) ist der Mischkondensator (11) der ersten Stufe. Am Rezipienten (11) ist der Saugstutzen (13) der zweiten Strahlstufe (20) angeschlossen. Das abzusaugende Gemisch aus dem Rezipienten (11) entspricht in der Zusammensetzung den nichtkondensierten kondensierbaren Bestandteilen gemäß der partiellen Kondensation im ersten Mischkondensator (11) zuzüglich einer Menge Leckluft als Inertes, die von der Dichtigkeit des Systems abhängig ist. Die Strahlpumpe (20) und deren Treibdampfdüse sind ebenfalls mit HTM beheizt. Der über Leitung (62) zugeführte Treibdampf der Strahlpumpe (20) wird dem Glykolverdampfersystem (57, 59) entnommen.

Im zweiten Mischkondensator (21) wird das aus der Strahlpumpe (20) austretende, dampfförmige Glykolgemisch mittels flüssigem Glykol (22) aus dem zweiten Einspritzteilkreislauf (50 und 22), welches eine etwas höhere Temperatur besitzt als das Glykol (12) des ersten Einspritzteilkreislaufs (50 - 53 und 12) partiell kondensiert. Die Führung dieser Kondensation (21) ist ebenfalls wesentlich für die Selbstreinigung des Systems an Leichtsiedern und Schwersiedern und für die minimale Belastung der nächstfolgenden Stufe. Durch entsprechende Mengeneinstellung bei gegebener Temperatur im zweiten Einspritzteilkreislauf (50 und 22) wird, zugehörig zum Vakuum im Mischkondensator (21), das durch das Verdichtungsverhältnis der Glykoldampfstrahlpumpe (20) gegeben ist, die partielle Brüdenkondensation so eingestellt, daß mit der Luft als Inertes die Leichtsieder (Wasser, Acetaldehyd oder Tetrahydrofuran usw.) soweit wie möglich in der Gasphase verbleiben, während das Glykol zusammen mit den verbleibenden Schwersiedern (Dimere, Oligomere usw.) möglichst kondensiert werden. Dabei wird durch Einstellen der Temperatur im Mischkondensator (21) in etwa die gleiche absolute Menge an nichtkondensierten kondensierbaren Bestandteilen in der Gasphase (23) gehalten, wie die, die über den Saugstutzen (13) des zweiten Glykoldampfstrahlers (20) zugeführt wird. Damit ist gewährleistet, daß die durch Leitung (24) ablaufende Flüssigphase aus dem Mischkondensator (21) etwa die gleiche Zusammensetzung hat, wie die des ersten Mischkondensators (11). Die beiden Kondensate aus der Leitung (14) und (24) können daher vermischt werden. Die kondensierten Anteile werden zusammen mit dem Einspritzglykol (22) über Leitung (24) und eine barometrische Abtauchung ebenfalls in den Kreislaufsammelbehälter (50) geleitet.

Analog zur zweiten Stufe ist der Rezipient der dritten Glykoldampfstrahlstufe (30) der Mischkondensator (21) der zweiten Stufe. Am Rezipienten (21) ist der Saugstutzen (23) der dritten Strahlstufe (30) angeschlossen. Das abzusaugende Gemisch aus dem Rezipienten (21) entspricht in der Zusammensetzung den nichtkondensierten kondensierbaren Bestandteilen gemäß der partiellen Kondensation im zweiten Mischkondensator (21) zuzüglich einer Menge Leckluft als Inertes, die von der Dichtigkeit des Systems abhängig ist. Die Strahlpumpe (30) und deren Treibdampfdüse sind wiederum mit HTM beheizt. Der über Leitung (61) zugeführte Treibdampf der Strahlpumpe (30) wird ebenfalls dem Glykolverdampfersystem (57, 59) entnommen.

Im dritten Mischkondensator (31) wird das aus der Strahlpumpe (30) austretende, dampfförmige Glykolgemisch mittels flüssigem Glykol (32) aus dem dritten Einspritzteilkreislauf (50 und 32), welches etwa die gleiche Temperatur besitzt, wie das Glykol (22) des zweiten Einspritzteilkreislaufs (50 und 22), partiell kondensiert. Auch die Führung dieser Kondensation (31) ist wesentlich für die Selbstreinigung des Systems an Leichtsiedern und Schwersiedern und für die minimale Belastung der nächstfolgenden Flüssigkeitsringpumpe (40). Durch entsprechende Mengeneinstellung bei gegebener Temperatur im dritten Einspritzteilkreislauf (50 und 32) wird, zugehörig zum Vakuum im Mischkondensator (31), das durch das Verdichtungsverhältnis der Glykoldampfstrahlpumpe (30) gegeben ist, wiederum die partielle Brüdenkondensation so eingestellt, daß mit der Luft als Inertes die Leichtsieder (Wasser, Acetaldehyd oder Tetrahydrofuran usw.) soweit wie möglich in der Gasphase verbleiben, während das Glykol zusammen mit den verbleibenden Schwersiedern (Dimere, Oligomere usw.) möglichst kondensiert werden. Dabei wird durch Einstellen der Temperatur im Mischkondensator (31) in etwa die gleiche absolute Menge an nichtkondensierten kondensierbaren Bestandteilen in der Gasphase gehalten, wie sie in dem über den Saugstutzen (23) des dritten Glykoldampfstrahlers (30) zugeführten Gemisch enthalten ist. Damit ist gewährleistet, daß die über Leitung (34) ablaufende Flüssigphase aus dem Mischkondensator (31) etwa die gleiche Zusammensetzung hat, wie die Flüssigphasen (14 und 24) aus dem ersten und zweiten Mischkondensator (11 und 21). Diese Flüssigphasen können daher vermischt werden. Die kondensierten Anteile werden zusammen mit dem Einspritzglykol (32) über Leitung (34) und eine barometrische Abtauchung in den Kreislaufsammelbehälter (50) geleitet.

Die Betriebsbedingungen der Mischkondensatoren (11, 21 und 31) hängen im wesentlichen von der Zusammensetzung und der Menge der abzusaugenden Brüden (2, 3 und 4), und diese wiederum von dem zu produzierenden Polyestertyp ab. Der Glykolgehalt der Gasphasen (13, 23 und 33) und der Wassergehalt der Kondensate (14, 24 und 34) kann leicht bestimmt werden. Die Betriebsparameter der Mischkondensatoren (11, 21 und 31), insbesondere die Menge und die Temperatur des Sprühglykols (12, 22 und 32), werden dann so eingestellt, daß der Glykolgehalt der Gasphasen und der Wassergehalt der Kondensate gleichzeitig auf einen Minimalwert absinkt. Dies entspricht einem Maximum an Glykol in den Kondensaten (14, 24 und 34) und einem Maximum an Wasser in den Gasphasen (13, 23 und 33).

Der Rezipient der Flüssigkeitsringpumpe (40) ist der Mischkondensator (31) der dritten Stufe. Am Rezipienten (31) ist die Saugleitung (33) der Flüssigkeitsringpumpen (40) angeschlossen. Das abzusaugende Gemisch aus dem Rezipienten (31) entspricht in der Zusammensetzung den nichtkondensierten kondensierbaren Bestandteilen gemäß der partiellen Kondensation im dritten Mischkondensator (31) zuzüglich einer Menge Leckluft als Inertes, die von der Dichtigkeit des Systems abhängig ist. Zusätzlich zu den Brüden des dritten Mischkondensators (31) werden die nicht kondensierten kondensierbaren Bestandteile und die Leckluft des Kondensationssystems des ersten Vorkondensationsreaktors des Polyester-Herstellungsprozesses über Leitung (4) in diese Saugleitung (33) eingeführt. Hierdurch wird gleichzeitig das für diese erste Vorkondensation erforderliche Vakuum, unter Verzicht auf eine zusätzliche Vakuumpumpe erzeugt. Die Zusammensetzung dieser Brüden (4) entspricht prinzipiell dem oben spezifiziertem Gemisch (2), wobei jedoch der Anteil an Wasser erhöht ist. Das Flüssigkeitsringpumpensystem besteht aus der Flüssigkeitsringpumpe (40), einem Entgasungsbehälter (42), in dem die Betriebsflüssigkeit (Glykol) sowie die in den vorangehenden Stufen nichtkondensierten kondensierbaren Bestandteile und die Leckluft als Inertes gemäß Dampfsättigung separiert werden, und einem Kühler (41), der im Kreislauf (43) der Betriebsflüssigkeit zwischengeschaltet ist. Die Betriebsflüssigkeit der Flüssigkeitsringpumpe (40) ist die Überschußflüssigkeitsmenge (55) aus dem Kreislaufsammelbehälter (50), die sich aus den Brüden der Polykondensation (2) und des Kondensationssystems der zweiten Vorkondensation (3) zuzüglich einer Menge Glykol (5) (rückgewonnenes oder frisches Glykol) zusammensetzt, vermindert um die Menge des Sumpfaustrages (58) aus dem Glykolverdampfer (57). Diese Betriebsflüssigkeit ist durch den Selbstreinigungseffekt des gesamten Glykolkreislaufsystems gegenüber den Polykondensationsbrüden (2) in den Anteilen der Leichtsieder angereichert und in den Anteilen der Schwersieder vermindert. Die Flüssigkeitsringpumpe (40) verdichtet als letztes Vakuumaggregat in der Vakuumerzeugungskette gegen Atmosphärendruck. Der Saugdruck der Flüssigkeitsringpumpe (40) wird durch die Verdichtungsverhältnisse der vorangeschalteten Glykoldampfstrahlpumpen (10, 20, 30) bestimmt. Zum ökonomischen Betrieb der Flüssigkeitsringpumpe (40) ist der Dampfdruck der Betriebsflüssigkeit der Flüssigkeitsringpumpe (40) in Abhängigkeit von deren Saugdruck einzustellen. Diese Einstellung kann sowohl über die Temperatur als auch über die Gemischzusammensetzung erfolgen. Der Kühler (41) wird mit gewöhnlichem Kühlwasser einer Temperatur von etwa 25 bis 30 °C betrieben. Um bei dieser Temperatur und den prozeßbedingten anteiligen Mengenverhältnissen die Flüssigkeitsringpumpe (40) im Optimum betreiben zu können, muß der Saugdruck der Flüssigkeitsringpumpe (40) im Bereich von 80 bis 110 mbar absolut liegen. Zusätzlich können durch Variieren der zugesetzten Menge Glykol (5) und somit der über Leitung (55) zugeführten Überschußflüssigkeitsmenge die anteilige Zusammensetzung der Betriebsflüssigkeit bzw. die anteiligen Dampfdrücke beeinflußt werden. Das Abgas des Flüssigkeitsringpumpen-Systems wird über Leitung (45) beispielsweise einer Verbrennung zugeführt, um unvermeidbare, gasförmige Schadstoffemission, bestehend aus mit geringen Mengen organischer Verbindungen verunreinigter Luft, in unschädliche Emission umzuwandeln. Der Flüssigkeitsüberlauf (44) der Betriebsflüssigkeit der Flüssigkeitsringpumpe (40) kann in der Mehrzahl der Anwendungsfälle direkt, ohne weitere Behandlung im Polyesterprozeß wiederverwendet werden. Im Einzelfall, z. B. bei Butandiol mit hohem Tetrahydrofuran-Anteil, kann eine zusätzliche destillative Reinigung zweckmäßig sein.

Das Glykolkreislaufsystem besteht prinzipiell aus dem Kreislaufsammelbehälter (50), der Kreislaufpumpe (52) und dem Kreislaufkühler (51). Im Kreislaufsammelbehälter (50), der gleichzeitig als Abtauchbehälter fungiert, wird das ablaufende Gemisch (14, 24 und 34) aus Glykolkondensat und Einspritzglykol aus den drei Mischkondensatoren (11, 21 und 31) gesammelt. Da in den Mischkondensatoren (11, 21 und 31) Vakuum und im Sammelbehälter (50) Atmosphärendruck herrscht, sind die Leitungen (14, 24 und 34) als Tauchrohre, deren Höhe durch den barometrischen Druckunterschied bestimmt wird, ausgebildet. Einströmen von Luft und Rückfließen von Flüssigkeit in die Mischkondensatoren wird so verhindert. Durch die ansteigenden Temperaturen des über die Leitungen (14), (24) bzw. (34) zugeführten Glykols ergibt sich im Kreislaufsammelbehälter (50) eine Mischtemperatur. Diese Mischtemperatur kann durch einen Seitenstrom (54), der aus dem ersten Einspritz-Teilkreislauf (50 - 53 und 12) nach dem Kreislaufkühler (51) abgenommen wird, beeinflußt werden. Vorzugsweise wird der Seitenstrom (54) so eingestellt, daß die Temperatur des Glykols im Kreislaufsammelbehälter (50) und im zweiten und dritten Einspritzteilkreislauf (22 und 32) um 5 bis 30 °C, bevorzugt um 10 bis 20 °C höher ist als die Temperatur des dem ersten Mischkondensator (11) zugeführten Glykols (12). Die Zusammensetzung des Glykols im Kreislauf ergibt sich aus der Menge der Brüden der Polykondensation (2) und des Kondensationssystems der zweiten Vorkondensation (3) zuzüglich einer minimierten Glykolmenge (5), die dem Kreislaufsammelbehälter (50) kontinuierlich geregelt zugeführt wird, abzüglich der Menge an Leichtsiedern (33), die in der Gasphase der Mischkondensatoren verbleiben, und abzüglich der aus dem Glykolverdampfer (57) ausgetragenen Menge (58). Als zuzusetzendes Glykol (5) kann frisches oder rückgewonnenes Glykol, vorzugsweise nur von Schwersiedern befreites Rück-Glykol, verwendet werden. Die Menge richtet sich nach dem einzustellenden Dampfdruck der Betriebsflüssigkeit der Flüssigkeitsringpumpe (40).

Mit Hilfe der Druckerhöhungs-Kreislaufpumpe (52) und üblicher Regeltechnik wird das Glykol des Kreislaufs in drei Teilkreisläufe (50 - 53 und 12, 22 bzw. 32) und zwei Austragsströme (55, 56) aufgeteilt: Der erste Einspritz-Teilkreislauf (50 - 53 und 12) wird in seiner vollen Menge im Kreislaufkühler (51) gekühlt und dient als Einspritz-Kühlflüssigkeit (12) zur Kondensation im ersten Mischkondensator (11). Ein Teilstrom (54) wird zur Temperierung des Glykols im Kreislaufsammelbehälter (50) verwendet. Die Menge der Einspritz-Kühlflüssigkeit (12) wird von der Temperatur im Mischkondensator (11) bestimmt. Der zweite Einspritz-Teilkreislauf (50 und 22) wird als temperierter Strom ohne weitere Kühlung als Einspritz-Kühlflüssigkeit (22) zur Kondensation dem zweiten Mischkondensator (21) zugeführt. Die Menge der Einspritz-Kühlflüssigkeit (22) wird von der Temperatur im Mischkondensator (21) bestimmt. Der dritte Einspritz-Teilkreislauf (50 und 32) wird als temperierter Strom - ebenfalls ohne weitere Kühlung - als Einspritzkühlflüssigkeit (32) zur Kondensation dem dritten Mischkondensator (31) zugeführt. Die Menge der Einspritz-Kühlflüssigkeit (32) wird wiederum von der Temperatur im Mischkondensator (31) bestimmt.

Der erste Austragsstrom (55) aus dem Glykolkreislauf führt Glykol zum Flüssigkeitsringpumpensystem (40 - 43). Diese Menge ist die Überschußmenge des Glykolkreislaufs. Der zweite Austragsstrom (56) führt Glykol im Kreislauf zum Glykolverdampfer (57). Diese Menge (56) ist die Menge an Treibdampf (61, 62 und 63) als Summe für die drei Strahlstufen (10, 20, 30), zuzüglich der zur Vakuumeinstellung üblicherweise notwendigen Regeldampfmenge (nicht dargestellt) und der Ausschleusemenge (58) aus dem Glykolverdampfer (57).

Zur Treibdampf- und Regeldampferzeugung (61, 62, 63) für die Glykoldampfstrahlpumpen (10, 20, 30) wird der Glykolverdampfer (57) eingesetzt, der mit HTM beheizt wird. Der Treibdampf wird im Glykolverdampfer (57) unter einem Druck im Bereich von 0,9 bis 1,2 bar absolut, bevorzugt unter leichtem Überdruck, erzeugt und gelangt über Leitung (60) in den mit HTM beheiztem Überhitzer (59), in dem der Dampf vorzugsweise um 5 bis 25 °C überhitzt wird. In den Treibdampf- und Regeldampfleitungen (60 bis 63) wird der Treibdampf mit einem Druck im Bereich von 0,8 bis 1,0 bar absolut, bevorzugt mit leichtem Unterdruck im Bereich von 0,90 bis 0,98 bar absolut, geführt.

Der Glykolverdampfer (57) wird aus dem Glykolkreislauf über Leitung (56) gespeist. Die Glykol-Zusammensetzung entspricht der des Kreislaufs, wie zuvor beschrieben. Die Zusammensetzung des Treib- und Regeldampfes (61 bis 63) für die Glykoldampfstrahlpumpen (10, 20, 30) entspricht der Zusammensetzung des Glykols des Kreislaufs vermindert um die Menge an Schwersiedern (Oligomeren usw.), die sich durch die Destillation im Glykolverdampfer (57) in dessen Sumpf anreichern. Die in den Glykolverdampfer (57) eingetragene Menge an Schwersiedern (Oligomeren usw) wird als Gemisch aus Glykol, Di- und Trimeren, Oligomeren usw. aus dem Sumpf des Glykolverdampfers (57) kontinuierlich durch Leitung (58) ausgetragen. Diese Austragsmenge (58) ist direkt recyclebar und wird ohne weitere Behandlung im Polyester-Herstellungsprozeß wiederverwendet. Im Einzelfall, z. B. bei Polyethylenterephthalat für hochtransparente Flaschen, kann eine destillative Reinigung vor der Rückführung zweckmäßig sein. Die Anreicherung der Schwersieder in der flüssigen Sumpfphase des Glykolverdampfers (57), die dadurch den Glykolkreisläufen entzogen werden, stellt den wichtigen Selbstreinigungseffekt des erfindungsgemäßen Systems in bezug auf die Schwersieder dar.

## Patentansprüche

1. Verfahren zur mehrstufigen Vakuumerzeugung sowie Kondensation und Rückführung der abgesaugten, mindestens ein C_{2 bis 4}-Alkylenglykol und Reaktionsnebenprodukte enthaltenden Brüden der Polykondensation von Vorkondensat bei der Polyester-Herstellung, wobei die letzte, gegen Atmosphärendruck verdichtende Stufe eine Flüssigkeitsringpumpe, einen Kühler sowie einen Entgasungsbehälter und jede der mindestens zwei vorangehenden Stufen je eine Glykoldampfstrahlpumpe sowie einen nachgeschalteten Glykolmischkondensator umfaßt,
dadurch gekennzeichnet, daß
die Glykoldampfstrahlpumpen mit überhitztem Glykoldampf mit einem Druck im Bereich von 0,8 bis 1,0 bar absolut betrieben werden,
und die Betriebsbedingungen der Mischkondensatoren so eingestellt werden, daß das Glykol möglichst vollständig kondensiert, während die leichtsiedenden Reaktionsnebenprodukte einschließlich Wasser soweit wie möglich in der Gasphase verbleiben und erst in der letzten Stufe kondensiert werden, wobei die Kondensate aus den Mischkondensatoren prozeßintern rückgeführt werden.

2. Verfahren gemäß Anspruch 1, dadurch gekennzeichnet, daß die Kondensate aus den Mischkondensatoren vereinigt werden und als Sprühglykol für diese Mischkondensatoren sowie zur Erzeugung des Glykoldampfes für die Strahlpumpen wiederverwendet werden, und überschüssiges Kondensat in den Entgasungsbehälter geleitet wird.

3. Verfahren gemäß Anspruch 2, dadurch gekennzeichnet, daß den vereinigten Kondensaten Glykol zugesetzt wird.

4. Verfahren gemäß einem der Ansprüche 1 bis 3, dadurch gekennzeichnet, daß das Kondensat der letzten Stufe ohne weitere Reinigung in den Polyester-Herstellungsprozeß rückgeführt wird und die Gasphase dieser letzten Stufe aus dem Prozeß ausgeschleust wird.

5. Verfahren gemäß einem der Ansprüche 1 bis 3, dadurch gekennzeichnet, daß das Kondensat der letzten Stufe nach destillativer Reinigung in den Polyester-Herstellungsprozeß rückgeführt wird und die Gasphase dieser letzten Stufe aus dem Prozeß ausgeschleust wird.

6. Verfahren gemäß einem der Ansprüche 2 bis 5, dadurch gekennzeichnet, daß die Temperatur des Sprühglykols für den ersten Mischkondensator durch Kühlen eines Teilstromes der vereinigten Kondensate aus den Mischkondensatoren und die Temperatur des Sprühglykols für die nachfolgenden Mischkondensatoren durch partielle Rückführung dieses gekühlten Teilstromes eingestellt wird.

7. Verfahren gemäß einem der Ansprüche 2 bis 6, dadurch gekennzeichnet, daß ein Teil der vereinigten Kondensate aus den Mischkondensatoren bei einem Druck im Bereich von 0,9 bis 1,2 bar absolut verdampft wird und der Dampf nach Einstellung des Druckes auf einen Wert im Bereich von 0,8 bis 1,0 bar absolut und Überhitzung um 5 bis 25 °C den Strahlpumpen als Betriebsmittel zugeführt wird.

8. Verfahren gemäß Anspruch 7, dadurch gekennzeichnet, daß die im Verdampfer zurückbleibende flüssige Phase ohne weitere Reinigung in den Polyester-Herstellungsprozeß rückgeführt wird.

9. Verfahren gemäß Anspruch 7, dadurch gekennzeichnet, daß die im Verdampfer zurückbleibende flüssige Phase nach destillativer Reinigung in den Polyester-Herstellungsprozeß rückgeführt wird.

10. Verfahren gemäß einem der Ansprüche 1 bis 9, dadurch gekennzeichnet, daß insgesamt drei Glykoldampfstrahlpumpen vorhanden sind, wobei das Verdichtungsverhältnis einer jeden Strahlpumpe im Bereich von 7 bis 10 und der Saugdruck der Flüssigkeitsringpumpe im Bereich von 80 bis 110 mbar absolut liegt.

11. Verfahren gemäß einem der Ansprüche 1 bis 10, dadurch gekennzeichnet, daß das Polyester-Vorkondensat durch Vorkondensation unter Vakuum erhalten wird, wobei das Vakuum gleichzeitig zu dem Vakuum für die Polykondensation erzeugt wird.

12. Verfahren gemäß Anspruch 11, dadurch gekennzeichnet, daß bei zweistufiger Vorkondensation die Saugleitung einer Stufe unmittelbar nach dem letzten Mischkondensator und die der anderen Stufe an einem vorangehenden Mischkondensator angeschlossen ist.

13. Verfahren gemäß einem der Ansprüche 1 bis 12, dadurch gekennzeichnet, daß das Glykol Ethylenglykol ist.

## Claims

1. A process for the multi-stage production and condensation and recycling of vapours which contain at least one C₂ to C₄ alkylene glycol and secondary reaction products which are removed by suction from the polycondensation of a precondensate during the production of a polyester, wherein the last stage, which is compressing against atmospheric pressure, contains a liquid ring-pump, a cooler and a degassing container and each of the at least two preceding stages each contain a glycol vapour jet pump and a downstream glycol mixing condenser,
characterised in that
the glycol vapour jet pumps are operated with superheated glycol vapour at a pressure in the range 0.8 to 1.0 bar absolute,
and the operating conditions for the mixing condensers are adjusted so that the glycol is condensed as completely as possible, whereas the low-boiling secondary reaction products, including water, remain as far as possible in the gas phase and are condensed only in the last stage, wherein the condensates from the mixing condensers are recycled within the process.

2. A process according to Claim 1, characterised in that the condensates from the mixing condensers are combined and are reused as spray-glycol for these mixing condensers and also for the production of glycol vapour for the jet pumps, and excess condensate is passed into the degassing container.

3. A process according to Claim 2, characterised in that glycol is added to the combined condensates.

4. A process according to one of Claims 1 to 3, characterised in that the condensate from the last stage is recycled to the polyester production process without further purification and the gas phase from this last stage is eliminated from the process.

5. A process according to one of Claims 1 to 3, characterised in that the condensate from the last stage is recycled to the polyester production process after purification by distillation and the gas phase from this last stage is eliminated from the process.

6. A process according to one of Claims 2 to 5, characterised in that the temperature of the spray-glycol for the first mixing condenser is adjusted by cooling a substream of the combined condensates from the mixing condensers and the temperature of the spray-glycol for the subsequent mixing condensers is adjusted by partial recycling of this cooled sub-stream.

7. A process according to one of Claims 2 to 6, characterised in that a part of the combined condensates from the mixing condensers is evaporated at a pressure in the range 0.9 to 1.2 bar absolute and the vapour is supplied to the jet pumps as operating fluid, after adjusting the pressure to a value in the range 0.8 to 1.0 bar absolute and superheating by 5 to 25 °C.

8. A process according to Claim 7, characterised in that the liquid phase remaining in the evaporator is recycled to the polyester production process without further purification.

9. A process according to Claim 7, characterised in that the liquid phase remaining in the evaporator is recycled to the polyester production process after purification by distillation.

10. A process according to one of Claims 1 to 9, characterised in that a total of three glycol vapour jet pumps are present, wherein the compression ratio of each of the jet pumps is in the range from 7 to 10 and the suction pressure of the liquid ring-pump is in the range from 80 to 110 mbar absolute.

11. A process according to one of Claims 1 to 10, characterised in that the polyester precondensate is obtained by precondensation under vacuum, wherein the vacuum is produced at the same time as the vacuum for polycondensation.

12. A process according to Claim 11, characterised in that in the case of a two-stage precondensation, the suction pipe for one stage is connected directly after the last mixing condenser and the suction pipe for the other stage is connected to a preceding mixing condenser.

13. A process according to one of Claims 1 to 12, characterised in that the glycol is ethylene glycol.

## Revendications

1. Procédé pour la production de vide en plusieurs étapes ainsi que pour la condensation et le recyclage des fumées à aspirer, contenant au moins un alkylèneglycol en C₂-C₄ et des produits secondaires de la réaction de la polycondensation d'un précondensat dans la préparation de polyester, la dernière étape de compression par rapport à la pression atmosphérique comprenant une pompe à anneau liquide, un refroidisseur ainsi qu'un récipient de dégazage et chacune des au moins deux étapes précédentes comprenant à chaque fois une pompe à jet de vapeurs de glycol ainsi qu'un co-condenseur de glycol raccordé en aval,
caractérisé en ce que
les pompes à jet de vapeurs de glycol fonctionnent avec des vapeurs de glycol surchauffées présentant une pression dans le domaine de 0,8 à 1,0 bar absolus, et les conditions de fonctionnement des co-condenseurs sont ajustées de telle sorte que le glycol est le plus possible totalement condensé alors que les produits secondaires de la réaction de faible point d'ébullition comprenant l'eau restent autant que possible dans la phase gazeuse et sont uniquement condensés dans la dernière étape, les condensats provenant des co-condenseurs étant recyclés de manière interne au procédé.

2. Procédé selon la revendication 1, caractérisé en ce que les condensats provenant des co-condenseurs sont réunis et sont réutilisés comme glycol d'injection pour ces co-condenseurs ainsi que pour la production des vapeurs de glycol pour les pompes à jet, et du condensat en excès est introduit dans le récipient de dégazage.

3. Procédé selon la revendication 2, caractérisé en ce que l'on ajoute du glycol aux condensats réunis.

4. Procédé selon l'une quelconque des revendications 1 à 3, caractérisé en ce que le condensat de la dernière étape est recyclé dans le procédé de préparation de polyester sans purification supplémentaire et la phase gazeuse de cette dernière étape est évacuée du procédé.

5. Procédé selon l'une quelconque des revendications 1 à 3, caractérisé en ce que le condensat de la dernière étape est recyclé dans le procédé de préparation de polyester après une purification par distillation et la phase gazeuse de cette dernière étape est évacuée du procédé.

6. Procédé selon l'une quelconque des revendications 2 à 5, caractérisé en ce que la température du glycol d'injection pour le premier co-condenseur est ajustée par refroidissement d'un courant partiel des condensats réunis provenant des co-condenseurs et la température du glycol d'injection pour les co-condenseurs suivants est ajustée par recyclage partiel de ce courant partiel refroidi.

7. Procédé selon l'une quelconque des revendications 2 à 6, caractérisé en ce qu'une partie des condensats purifiés provenant des co-condenseurs est évaporée à une pression dans le domaine de 0,9 à 1,2 bar absolus et les vapeurs sont introduites comme moyen d'entraînement dans les pompes à jet après ajustement de la pression à une valeur dans le domaine de 0,8 à 1,0 bar absolus et surchauffe à une température de 5 à 25 °C.

8. Procédé selon la revendication 7, caractérisé en ce que la phase liquide restant dans l'évaporateur est renvoyée dans le procédé de préparation de polyester sans purification supplémentaire.

9. Procédé selon la revendication 7, caractérisé en ce que la phase liquide restant dans l'évaporateur est renvoyée dans le procédé de préparation de polyester après une purification par distillation.

10. Procédé selon l'une quelconque des revendications 1 à 9, caractérisé en ce qu'au total trois pompes à jet de vapeurs de glycol sont présentes, le rapport de compression de chaque pompe à jet étant dans le domaine de 7 à 10 et la pression d'aspiration de la pompe à anneau liquide étant dans le domaine de 80 à 110 mbar absolus.

11. Procédé selon l'une quelconque des revendications 1 à 10, caractérisé en ce que l'on obtient le précondensat de polyester par précondensation sous vide, le vide étant simultanément produit pour le vide destiné à la polycondensation.

12. Procédé selon la revendication 11, caractérisé en ce que dans une précondensation à deux étapes la canalisation d'aspiration d'une étape est directement raccordée après le dernier co-condensateur et celle de l'autre étape à un co-condenseur précédent.

13. Procédé selon l'une quelconque des revendications 1 à 12, caractérisé en ce que le glycol est l'éthylèneglycol.
